(19) Europäisches Patentamt

European Patent Office

Office européen des brevets

(11) **EP 0 892 085 B1**

(12) **EUROPEAN PATENT SPECIFICATION**

(45) Date of publication and mention
of the grant of the patent:
**16.08.2001 Bulletin 2001/33**

(51) Int Cl.⁷: $C25C\ 3/08$, $C04B\ 41/87$

(21) Application number: **98116542.6**

(22) Date of filing: **28.05.1993**

(54) **Drained cathode aluminium production cells**

Drainierte Kathode für Zellen zur Herstellung von Aluminium

Cathode drainée pour cellules de production d'aluminium

(84) Designated Contracting States:
**DE ES FR GB GR IT NL SE**

(30) Priority: **12.06.1992 US 898052**

(43) Date of publication of application:
**20.01.1999 Bulletin 1999/03**

(62) Document number(s) of the earlier application(s) in
accordance with Art. 76 EPC:
**93915165.0 / 0 663 022**

(73) Proprietor: **MOLTECH Invent S.A.**
**2320 Luxembourg (LU)**

(72) Inventors:
• **De Nora, Vittorio**
  **Nassau (BS)**
• **Sekhar, Jainagesh A.**
  **Cincinnati, OH 45221-0012 (US)**

(74) Representative: **Cronin, Brian Harold John**
**Cronin Intellectual Property**
**Route de Clémenty 62**
**1260 Nyon (CH)**

(56) References cited:
**WO-A-88/03519**      **GB-A- 1 317 437**

## Description

<u>Field of the Invention</u>

The invention relates to cells for the production of aluminium by the electrolysis of alumina dissolved in a cryolite-based molten electrolyte having drained cathodes, in particular carbon cathodes, coated with refractory borides. The invention also relates to such cathodes coated with refractory borides, as well as the use of these drained cells for the production of aluminium.

<u>Background of the Invention</u>

Aluminium is produced conventionally by the Hall-Héroult process, by the electrolysis of alumina dissolved in cryolite-based molten electrolytes at temperatures up to around 950°C. A Hall-Héroult reduction cell typically has a steel shell provided with an insulating lining of refractory material, which in turn has a lining of carbon which contacts the molten constituents. Conductor bars connected to the negative pole of a direct current source are embedded in the carbon cathode substrate forming the cell bottom floor. The cathode substrate is usually an anthracite based carbon lining made of prebaked cathode blocks, joined with a ramming mixture of anthracite, coke, and coal tar.

In Hall-Héroult cells, a molten aluminium pool acts as the cathode. The carbon lining or cathode material has a useful life of three to eight years, or even less under adverse conditions. The deterioration of the cathode bottom is due to erosion and penetration of electrolyte and liquid aluminium as well as intercalation of sodium, which causes swelling and deformation of the cathode carbon blocks and ramming mix. In addition, the penetration of sodium species and other ingredients of cryolite or air leads to the formation of toxic compounds including cyanides.

Difficulties in operation also arise from the accumulation of undissolved alumina sludge on the surface of the carbon cathode beneath the aluminium pool which forms insulating regions on the cell bottom. Penetration of cryolite and aluminium through the carbon body and the deformation of the cathode carbon blocks also cause displacement of such cathode blocks. Due to displacement of the cathode blocks, aluminium reaches the steel cathode conductor bars causing corrosion thereof leading to deterioration of the electrical contact, non uniformity in current distribution and an excessive iron content in the aluminium metal produced.

A major drawback of carbon as cathode material is that it is not wetted by aluminium. This necessitates maintaining a deep pool of aluminium (at least 100-250 mm thick) in order to ensure a certain protection of the carbon blocks and an effective contact over the cathode surface. But electromagnetic forces create waves in the molten aluminium and, to avoid short-circuiting with the anode, the anode-to-cathode distance (ACD) must be kept at a safe minimum value, usually 40 to 60 mm. For conventional cells, there is a minimum ACD below which the current efficiency drops drastically, due to short-circuiting between the aluminium pool and the anode. The electrical resistance of the electrolyte in the interelectrode gap causes a voltage drop from 1.8 to 2.7 volts, which represents from 40 to 60 percent of the total voltage drop, and is the largest single component of the voltage drop in a given cell.

To reduce the ACD and associated voltage drop, extensive research has been carried out with Refractory Hard Metals or Refractory Hard Materials (RHM) such as $TiB_2$ as cathode materials. $TiB_2$ and other RHM's are practically insoluble in aluminium, have a low electrical resistance, and are wetted by aluminium. This should allow aluminium to be electrolytically deposited directly on an RHM cathode surface, and should avoid the necessity for a deep aluminium pool. Because titanium diboride and similar Refractory Hard Metals are wettable by aluminium, resistant to the corrosive environment of an aluminium production cell, and are good electrical conductors, numerous cell designs utilising Refractory Hard Metal have been proposed, which would present many advantages, notably including the saving of energy by reducing the ACD.

The use of titanium diboride and other RHM current-conducting elements in electrolytic aluminium production cells is described in US Patents Nos. 2,915,442, 3,028,324, 3,215,615, 3,314,876, 3,330,756, 3,156,639, 3,274,093 and 3,400,061. Despite extensive efforts and the potential advantages of having surfaces of titanium diboride at the cell cathode bottom, such propositions have not been commercially adopted by the aluminium industry.

The non-acceptance of tiles and other methods of applying layers of $TiB_2$ and other RHM materials on the surface of aluminium production cells is due to their lack of stability in the operating conditions, in addition to their cost. The failure of these materials is associated with penetration of the electrolyte when not perfectly wetted by aluminium, and attack by aluminium because of impurities in the RHM structure. In RHM pieces such as tiles, oxygen impurities tend to segregate along grain boundaries leading to rapid attack by aluminium metal and/or by cryolite. To combat disintegration, it has been proposed to use highly pure $TiB_2$ powder to make materials containing less than 50 ppm oxygen. Such fabrication further increases the cost of the already-expensive materials. No cell utilising $TiB_2$ tiles as cathode is known to have operated for long periods without loss of adhesion of the tiles, or their disintegration. Other reasons for failure of RHM tiles have been the lack of mechanical strength and resistance to thermal shock.

Various types of $TiB_2$ or RHM layers applied to carbon substrates have failed due to poor adherence and to differences in thermal expansion coefficients between the titanium diboride material and the carbon cathode block.

US Patent No. 4,093,524 discloses bonding tiles of titanium diboride and other Refractory Hard Metals to a conductive substrate such as graphite. But large differences in thermal expansion coefficients between the RHM tiles and the substrate cause problems.

US Patent No. 5,320,717 provides a method of bonding bodies of Refractory Hard Material (RHM) or other refractory composites to carbon cathodes of aluminium protection cells using a colloidal slurry comprising particulate preformed RHM in a colloidal carrier selected from colloidal alumina, colloidal yttria and colloidal ceria as a glue between the bodies and the cathode or other component. The slurry is dried to bond the bodies to the cathode or other component, the dried slurry acting as a conductive thermally-matched glue which provides excellent bonding of the bodies to the cathode or other component.

WO93/20027 published on 14 October 93 constitutes a non-prepublished prior art document under Art 54(3) EPC and discloses a method of producing a protective refractory coating on a substrate of, *inter-alia,* carbonaceous materials by applying to the substrate a micropyretic reaction layer from a slurry containing particulate reactants in a colloidal carrier, and initiating a micropyretic reaction. The micropyretic slurry optionally also contains some preformed refractory material, and the micropyretic slurry may be applied on a non-reactive sub-layer.

WO93/20026 published on 14 October 93 constitutes a non-prepublished prior art document under Art 54(3) EPC and discloses a body of carbonaceous or other material for use in corrosive environments such as oxidising media or gaseous or liquid corrosive agents at elevated temperatures, coated with a protective surface coating which improves the resistance of the body to oxidation or corrosion and which may also enhance the bodies electrical conductivity and/or its electrochemical activity. This protective coating, in particular silica-based coatings, is applied from a colloidal slurry containing particulate reactant or non-reactant substances, or a mixture of particulate reactant and non-reactant substances, which when the body is heated to a sufficient elevated temperature form the protective coating by reaction sintering and/or sintering without reaction.

Disclosure of the Invention

The invention aims to overcome the deficiencies of past attempts to utilise refractory materials, in particular refractory borides as surface coatings on carbonaceous substrates, for protecting the substrates from the corrosive attacks of liquids and gases when used as drained cathodes for aluminium production cells.

An object of the invention is to provide refractory boride coatings that are well adherent to the cathode substrates, provide the required protection to the drained cathodes and have the desired mechanical, physical, chemical, and electrochemical characteristics.

A further object is to provide drained cathode coatings which are adherent to the carbon-containing substrates and protect the substrates efficiently from the corrosive attacks of liquids existing or produced in aluminium production cells wherein drained cathodes have to be mechanically strong at the operating temperature and have additional required characteristics.

In particular an aluminium-wettable refractory boride drained coating permits the elimination of the thick aluminium pool required to partially protect the cathode, enabling the cell to operate with a drained cathode.

By protecting a carbonaceous drained cathode from attack by NaF or other aggressive ingredients of the electrolyte, the cell efficiency is improved. Because NaF in the electrolyte no longer reacts with the carbonaceous material, the cell functions with a defined bath ratio without a need to replenish the electrolyte with NaF.

The aluminium-wettable, refractory, electrically conductive, adherent boride coating has been developed to be applied to the surface of the cell's drained cathode, usually made of carbonaceous material, for protection against the attack of sodium which produces deformation of the cathode blocks and formation of dangerous nitrogen compounds such as cyanides.

The protective effect of the coatings according to the invention is such as to enable the use of relatively inexpensive carbon-containing materials for the substrates. For instance, cheaper grades of graphite can be used instead of the more expensive anthracite forms of carbon, while providing improved resistance against the corrosive conditions in the cell environment.

The refractory boride coatings have the following attributes: excellent wettability by molten aluminium, excellent adherence to the carbon-containing substrates, inertness to attack by molten aluminium and cryolite, low cost, environmentally safe, ability to absorb thermal and mechanical shocks without delamination from the anthracite-based carbon or other carbonaceous substrates, durability in the environment of an aluminium production cell, and ease of application and processing. The preferred coatings furthermore have a controlled microporosity and degree of penetration in the porous carbonaceous substrate, by having an adequate distribution of the particle sizes of the preformed refractory boride.

When these refractory boride coatings are applied to a carbon-based substrate, for instance of graphite or anthracite-based carbon used in an aluminium production cell in contact with the molten electrolyte and/or with molten aluminium, the coating protects the substrate against the ingress of cryolite and sodium and is in turn protected by the protective film of aluminium on the coating itself.

The refractory boride coatings find many applications on account of their excellent resistance, protection, and stability when exposed to the corrosive action of liquids and fumes existing in the cell or formed during electrolysis even when the temperature of operation is low as in the Low Temperature electrolysis process for the production of aluminium (see for example US Patent No. 4,681,671).

The Colloidal Slurry

A slurry, in particular for the application of refractory hard metal boride to drained carbon-containing cathodes of cells for the production of aluminium by the electrolysis of alumina dissolved in a cryolite-based molten electrolyte is provided, to protect such cathodes from attack by liquid and/or gaseous components of the electrolyte in the form of elements, ions or compounds and to make them aluminium-wettable, wherein the slurry is composed of pre-formed particulate refractory boride in a colloidal carrier.

It is essential to use colloids and mixtures of colloids for application of the coatings. Three types of colloidal processing are possible. The first involves the gelation of certain polysaccharide solutions. This, however, is relatively unimportant to this invention. The other two which involve colloids and metal organic compounds are relevant to this invention. These two involve the mixing of materials in a very fine scale. Colloids are defined as comprising a dispersed phase with at least one dimension between 0.5 nm (nanometer) and about 10 micrometers in a dispersion medium which in our case is a liquid. The magnitude of this dimension distinguishes colloids from bulk systems in the following way: (a) an extremely large surface area and (b) a significant percentage of molecules reside in the surface of colloidal systems. Up to 40% of molecules may reside on the surface. The colloidal systems which are important to this invention are both the thermodynamically stable lyophylic type (which include macromolecular systems such as polymers) and the kinetically stable lyophobic type (those that contain particles).

Insoluble oxides in aqueous suspension develop surface electric charges by surface hydroxylation followed by dissociation of surface hydroxyl groups. Typical equations could be :

$$M(OH)\ surface + H_2O \Leftrightarrow MO^-\ surface + H_3O^+$$

$$M(OH)\ surface + H_2O \Leftrightarrow M(OH_2)^+\ surface + OH^-$$

where M represents a metal or a complex cation.

Such surface charges and the London and Van der Waals forces keep the particles from agglomerating. An adsorbed layer of material, polymer or surface active agent, modifies the interaction of particles in several ways. In the mixing process described below we introduce particulate pre-formed refractory borides.

Colloids may form through cation hydrolysis. Many metal ions are subject to hydrolysis because of high electronic charge or charge density. Initial products of hydrolysis can condense and polymerise to form polyvalent metal or polynuclear ions, which are themselves colloidal. Charge and pH determine the ligands for central cations and the anion/cation ratio controls the degree of polymerisation and stability of the suspension. The pH could vary from 0 to 14. A wide range of polynuclear cationic hydrolysis products may exist with charge from 2+ to 6+. Polynuclear anionic hydrolysis products could also have a wide range of charges.

The formation of colloids involves a starting material for example a reagent grade metal salt which is converted in a chemical process to a dispersible oxide which forms the colloidal solution on addition of dilute acid or water. Removal of water (drying) and or removal of the anions from the colloidal solution produces a gel like product.

The colloidal carrier, usually colloidal alumina, silica, yttria, ceria, thoria, zirconia, magnesia, lithia, monoaluminium phosphate or cerium acetate, and usually in an aqueous medium, has been found to considerably improve the properties of the coating produced by non-reactive sintering.

The colloidal slurry contains particulate pre-formed refractory hard metal boride(s). Above 900°C, sintering or consolidation may occur during exposure to the service conditions at the high temperature.

The constituents of the slurries are :

(a) a carrier, chosen from colloidal liquids which could be colloidal alumina, silica, yttria, ceria, thoria, zirconia, magnesia, lithia, monoaluminium phosphate, cerium acetate or mixtures thereof; and

(b) a powder additive containing pre-formed refractory borides.

The colloid may be derived from colloid precursors and reagents which are solutions of at least one salt such as chlorides, sulfates, nitrates, chlorates, perchlorates or metal organic compounds such as alkoxides, formates, acetates of aluminium, silicon, yttrium, cerium, thorium zirconium, magnesium and lithium. These colloid precursors or colloid reagents can contain a chelating agent such as acetyl acetone or ethylacetoacetate. The aforesaid solutions of metal organic compounds, principally metal alkoxides, can be of the general formula $M(OR)_z$ where M is a metal or complex cation, R is an alkyl chain and z is a number, preferably from 1 to 12.

The pre-formed particulate refractory boride is selected from borides of titanium, chromium, vanadium, zirconium, hafnium, niobium, tantalum, molybdenum and cerium. The preferred particulate refractory boride is titanium diboride.

When choosing powder additives the particle size selection is of importance. It is preferable to choose particle size below 100 micrometers and to choose particle sizes which are varied such that the packing of particles is optimised. For example it is preferable to choose particle sizes extending over a range where the smallest particles are at least two times and preferably at least three times smaller than the large ones. Generally, the ratio of the particle sizes will be in the range from 2:1 to 15:1, usually from about 3:1 to 10:1, for instance a ratio of about 3:1 with large particles in the range 15 to 30 micrometers and small particles in the range 5 to 10 micrometers, or a ratio of about 10:1 with large particles in the range from 30 to 50 micrometers and small particles in the range from 3 to 5 micrometers. Usually, the pre-formed particulate metal boride has particles with sizes in the range from about 3 micrometers to about 50 micrometers.

The slurry usually contains 5 to 100 g of the pre-formed particulate refractory boride per 10ml of colloid and the colloid has a dry colloid content corresponding to up to 50 weight% of the colloid plus liquid carrier, preferably from 10 to 20 weight%.

The colloid is contained in a liquid such as water which may further contain at least one compound selected from compounds of lithium, aluminium, cerium, sodium and potassium, for instance at least one compound of lithium and at least one compound of aluminium, see US Patent No. 5,397,450.

Method of Production

A method of applying a refractory hard metal boride, in particular $TiB_2$ to a drained cathode, such as a carbon-containing cathode, of a cell for the production of aluminium, in particular by the electrolysis of alumina dissolved in a cryolite-based molten electrolyte is also provided for protection against cryolite, molten aluminium and sodium and to make the drained cathode aluminium-wettable. This method comprises applying to the surface of the cathode a slurry of particulate pre-formed refractory boride in a colloidal carrier as specified above, followed by drying, and by heat treatment before or after the cathode is installed in an aluminium production cell.

The method of application of the slurry involves painting (by brush or roller), dipping, spraying, or pouring the slurry onto the substrate and allowing for drying before another layer is added. The coating need not entirely dry before the application of the next layer. It is preferred to heat the coating with a suitable heat source so as to completely dry it and improve densification of the coating. Heating takes place preferably in air but could be in other oxidising atmospheres or in inert or reducing atmospheres. A heat treatment in air at about 80 to 200°C, for half an hour to several hours is usually sufficient.

The substrate may be treated by sand blasting or pickled with acids or fluxes such as cryolite or other combinations of fluorides and chlorides prior to the application of the coating. Similarly the substrate may be cleaned with an organic solvent such as acetone to remove oily products and other debris prior to the application of the coating. These treatments will enhance the bonding of the coatings to the carbon-containing substrate.

After coating the substrate by dipping, painting or spraying the slurry or combinations of such techniques in single or multi-layer coatings and drying, a final coat of the colloid alone may be applied lightly prior to use.

More generally, before or after application of the coating and before use, the body can be painted, sprayed, dipped or infiltrated with reagents and precursors, gels and/or colloids. For instance, before applying the slurry of particulate refractory boride in the colloidal carrier the carbonaceous cathode can be impregnated with e.g. a compound of lithium to improve the resistance to penetration by sodium, as described in US Patent No. 5,378,327.

To assist rapid wetting of the cathodes by molten aluminium, the refractory material coated on the substrate may be exposed to molten aluminium in the presence of a flux assisting penetration of aluminium into the refractory material, the flux for example comprising a fluoride, a chloride or a borate, of at least one of lithium and sodium, or mixtures thereof. Such treatment favours aluminization of the refractory coating by the penetration therein of aluminium.

The substrate of the cathode may be coated outside the aluminium production cell and the coated cathode then inserted into the cell. Alternatively, the cathode is part of a cell which is coated in the cell prior to operation. For instance, the cathode is part of a cell bottom formed by an exposed area of carbonaceous material. In this case, the slurry is preferably applied to the cell bottom in several layers with drying of each successive layer and final drying by means of a mobile heat source.

More generally, the method improves the resistance to oxidation or corrosion of a drained cathode, in particular made of carbonaceous material, in an electrochemical cell for the production of aluminium, in particular by the electrolysis of alumina dissolved in a cryolite-based molten electrolyte, which cathode in use is exposed to cryolite and/or to a product of electrolyis in the cell. This method comprises applying to the cathode a protective coating from a slurry of the preformed refractory boride in a colloidal carrier, followed by heating the cathode prior to or during use to a sufficient temperature to cause the boride to consolidate to form an adherent protective coating.

Drained Cathodes

The invention concerns drained cathodes of aluminium production cells which in use of the cell are exposed to contact with molten cryolite and/or molten aluminium. The drained cathode is for instance a cathode block or forms part of a cathodic cell bottom, or may be part of a bipolar electrode.

According to the invention, there is provided a drained cathode, such as a carbon-containing cathode, of a cell for the production of aluminium by the electrolysis of alumina dissolved in a cryolite-based molten electrolyte, which cathode is protected from attack by components of the electrolyte in the form of elements, ions or compounds and made aluminium-wettable by a coating of pre-formed particulate refractory hard metal boride in a dried colloid applied on the cell component from a slurry of the pre-formed particulate refractory hard metal boride in a colloidal carrier, as set out above.

The slurry-applied refractory boride coatings may have a thickness from about 150 micrometers to about 1500 micrometers, usually from about 200 to about 500 micrometers, depending on the number of applied layers, the particle size of the preformed boride, and the porosity of the carbon. Advantageously, by using graded boride particles including fine particles, the smaller boride particles penetrate into the pores of the carbon component and firmly anchor the coating. Typically, the boride may impregnate the carbon to a depth of about 50-200 micrometers. The colloid impregnates the carbon cathode so the dried colloid is dispersed through the carbon cathode.

The invention concerns in general the protection of drained cathodes of electrochemical cells according to claim 33 for the production of aluminium by the electrolysis of alumina dissolved in a cryolite-based molten electrolyte, which cathodes in use are exposed to a molten cryolite and/or to aluminium produced in the cell. Such cathodes are coated with a protective, aluminium-wettable surface coating which improves the resistance of the cathodes to oxidation or corrosion and which may also enhance the electrical conductivity and/or electrochemical activity. The protective, aluminium-wettable coating is applied from a colloidal slurry containing particulate preformed refractory boride and dried. When the cathode is heated to a sufficient elevated temperature, prior to or upon insertion in the cell, a protective, aluminium-wettable coating is formed by sintering or consolidation without reaction.

The invention also concerns a drained cathode of an aluminium production cell according to claim 33 which in use is subjected to exposure to molten cryolite and/or to molten aluminium, the cathode comprising a substrate of a carbonaceous material, coated with a refractory boride, of at least one of titanium, chromium, vanadium, zirconium, hafnium, niobium, tantalum, molybdenum and cerium or mixtures thereof, finely mixed with a refractory compound of at least one alumina, silica, yttria, ceria, thoria, zirconia, magnesia and lithia from a dried colloid.

The drained cathode is usually made of carbonaceous material selected from petroleum coke, metallurgical coke, anthracite, graphite, amorphous carbon, fullerene, low density carbon or mixtures thereof. Composite materials based on one or more of these forms of carbon with other materials may also be employed.

It is advantageous to have a substrate of low-density carbon protected by the refractory boride. Low density carbon embraces various types of relatively inexpensive forms of carbon which are relatively porous and very conductive, but hitherto could not be used successfully in the environment of aluminium production cells on account of the fact that they were subject to excessive corrosion or oxidation. Now it is possible by coating these low density carbons according to the invention, to make use of them in these cells instead of the more expensive high density anthracite and graphite, taking advantage of their excellent conductivity and low cost.

The substrate may consist of carbonaceous blocks that can be fitted together to form a cell bottom of an aluminium production cell, or packed carbonaceous particulate material forming a cell bottom, which acts to carry current to the cathodic thin layer of aluminium through the refractory boride coating in drained cells.

Electrolytic Cells and Operation

The invention also relates to an aluminium production drained cell according to claim 1 comprising a coated drained cathode as discussed above as well as a method of operating the cell to produce aluminium using such drained cathodes.

Such cells comprise at least one drained cathode which in operation of the cell is exposed to molten aluminium and/or cryolite, said cathode comprising a substrate of carbonaceous material and a drained coating of refractory boride, applied from a colloidal slurry as discussed above, wherein the product aluminium is in contact with the refractory boride drained coating on the cathode, which may be a cathode block or forms part of a cathodic cell bottom.

The drained cathode coated with the refractory boride drained coating forming the cathodic surface on which the aluminium is deposited cathodically may be arranged upright or at a slope for the aluminium to drain from the cathodic surface.

The invention concerns also a method of producing aluminium according to claim 39.

A method of operating the cells comprises :

- producing a drained cathode which comprises a substrate, usually made of carbonaceous material, and a protective coating of refractory boride, by applying to the substrate a slurry containing particulate preformed refractory boride in a colloidal carrier drying and optionally subjecting the component to heat treatment;

- placing the coated drained cathode in the drained cell so the coating of refractory material will be contacted by the cathodically produced aluminium, and/or the molten electrolyte; and

- operating the cell with the coating protecting the substrate from attack by the cathodically-produced aluminium and/or by the molten electrolyte.

Operation of the cell is advantageously in a low temperature process, with the molten halide electrolyte containing dissolved alumina at a temperature below 900°C, usually at a temperature from 680°C to 880°C. The low temperature electrolyte may be a fluoride melt, a mixed fluoride-chloride melt or a chloride melt.

This low temperature process is operated at low current densities on account of the low alumina solubility. This necessitates the use of large anodes and corresponding large cathodes, exposing large areas of these materials to the corrosive conditions in the cell, such large exposed areas being well protected by the refractory coatings according to the invention which are just as advantageous at these lower temperatures.

Brief Description of the Drawings

The invention will now be described with reference to the application of coatings to components of electrolytic cells for the production of aluminium, especially for novel designs of these cells, as illustrated in the accompanying drawings, wherein :

- Figure 1 schematically shows an aluminium production cell with a carbon bottom and lower cell wall lining shown with deep pool operation, but which can be modified to operate as a drained cathode cell according to the invention;

- Figure 2 schematically shows an aluminium production drained cell in which drained coated carbon cathode bodies according to the invention have been placed on the cell bottom in a pool of molten aluminium;

- Figure 3 schematically shows a novel aluminium production drained cell in which drained carbon cathode bodies having a wedge form and coated according to the invention have been secured on the cell bottom, and cooperate with inclined anodes; and

- Figure 4 schematically shows an aluminium production drained cell in which drained carbon cathodes with inclined upper faces and coated according to the invention have been secured on the cell bottom and cooperate with inclined anodes.

Detailed Description

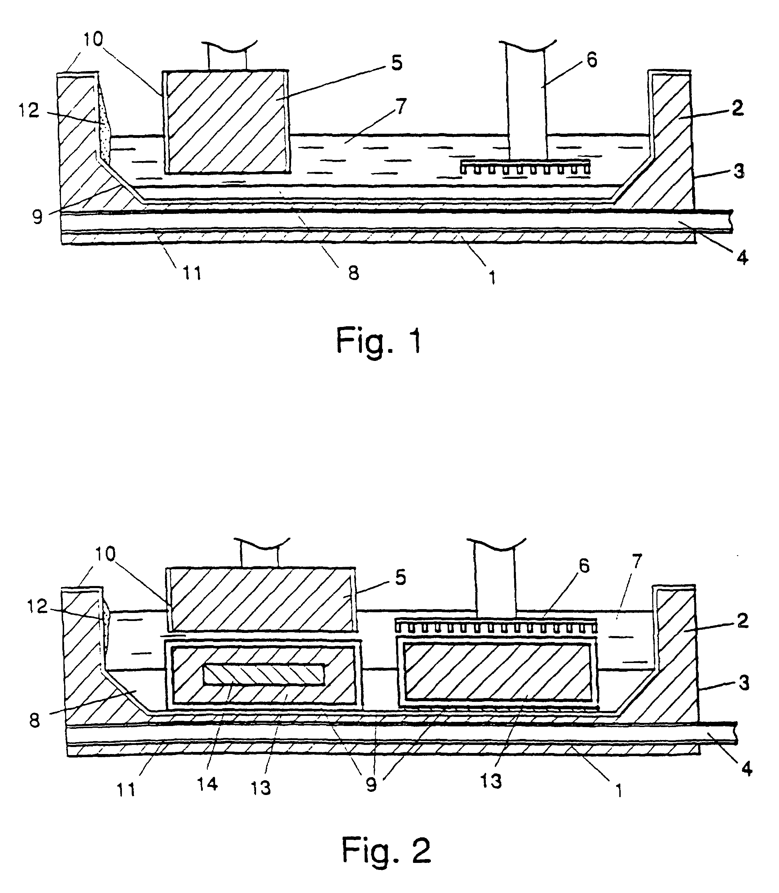

Figure 1 schematically shows a Hall-Héroult aluminium production cell of conventional design that has been modified by providing the cell bottom with a coating of refractory aluminium wettable material. The cell shown in Figure 1 has a deep pool configuration but can be modified to operate as a drained cell according to the invention by placing or securing drained cathode blocks on its bottom and by using correspondingly shaped anodes, for example as shown in Figures 2, 3 and 4.

The upper part of the cell wall is protected with a coating 10 resisting oxidation and the lower part is protected with a coating 9 particularly resistant to cryolite. The cell comprises a cell bottom 1 and side walls 2 of carbon enclosed in a steel lining 3. The cell bottom 1 and side walls 2 are made of blocks of anthracite-based carbon packed together and bonded by a carbon-based ramming paste. Through the bottom 1 extend steel current feeder bars 4 connected externally to a negative bus bar. To protect the cathode current feeder bars 4 from aluminium, an aluminium-resistant coating 11 is applied on their surfaces in accordance with the invention.

Several anodes 5, conventionally blocks of pre-baked carbon, are suspended in the cell by the usual mechanisms (not shown) enabling their height to be adjusted. Oxygen evolving non-carbon anodes 6 may be suspended in the cell instead of the carbon anodes 5 but do not need to be vertically adjustable because they are non-consumable. The anodes 5 and 6 dip in a molten electrolyte 7, usually a cryolite-based melt containing dissolved alumina, and which floats above a pool or thin layer 8 of molten aluminium on the cell bottom. In operation, the cryolite-based electrolyte 7 is usually at a temperature of about 950°C, but the invention applies also to components used in cells with electrolytes well below 900°C, and as low as 700°C.

The top surface of the carbon cell bottom 1, i. e. the entire flat top surface and at least the lower parts of the inclined side walls liable to be exposed to the molten aluminium 8, is coated with a slurry-applied adherent coating 9 of an aluminium-wettable refractory boride, preferably titanium diboride, and the carbon is impregnated with dried colloids such as alumina, ceria, yttria and/or silica. This coating 9 can extend to just above the maximum level of the aluminium 8, all the way up the side walls, or up to the crust 12 of solidified electrolyte, if there is one. If required, a titanium diboride coating can be used to protect the carbon from attack by the cryolite, and a different coating 10 can be provided on the upper part of the side walls to protect the carbon from oxidation and the fluoride fumes.

The presence of the aluminium-wettable coating 9 means that the cell can be operated with a relatively shallow layer 8 of molten aluminium and the anodes 5 or 6 can be held with a small and constant gap of about 20 to 30 mm above the aluminium layer 8. This reduced anode-cathode distance leads to a substantial reduction in the voltage drop through electrolyte 7, and less heat dissipation during operation. It may thus be possible to operate the cell without the usual crust of solidified electrolyte around the periphery (especially when non-consumable anodes 6 are used) or at least with a much smaller crust, indicated by 12.

The aluminium-wettable coating 9 can be applied directly to a new, unused or re-built cell bottom 1, or can be applied to a used cell bottom 1 after emptying the cell of its molten contents for servicing, and machining the top surface of the cell bottom 1 to remove damaged or reacted parts and generally to renew the exposed surface.

To produce the aluminium-wettable coating 9 and the other coatings 10 and 11, several layers of a slurry of preformed particulate refractory boride in a colloidal carrier, as hereinbefore or as hereinafter described in detail, are applied for instance by brushing the slurry onto the surface, with drying between the application of successive layers. After application of the final layer, the coating is dried using a suitable mobile heat source, for example at about 100 to 200°C for several minutes to about half an hour.

After drying of the aluminium-wettable coating 9, the cell can be started with one of the usual methods by filling with electrolyte and aluminium and raising the temperature to the operating temperature, e.g. by the usual means of passing current from the anodes 5 or 6 to the cell bottom 1 with an adequate anode-cathode distance. This heating to operating temperature further consolidates the boride coating 9.

The excellent and permanent wetting of the carbon cell bottom 1 by the aluminium-wettable coating 9 means that : during operation the cell bottom 1 is protected against unwanted reactions with components of the electrolyte 7, the cell can operate with a drained cathode, the anode-cathode gap can be decreased, and no sludge or muck can come to settle between the aluminium layer 8 and the cell bottom 1. The operating efficiency is thus enhanced, the energy consumption decreased, the useful lifetime of the cell bottom is extended and there is considerably less toxic material to be disposed of when the cell bottom must be serviced. As a result, aluminium can be produced in a drained cathode cell according to the invention at substantially lower cost than in a non-coated cell of the prior art.

The drained cathode cell shown in Figure 2 has a carbon cell bottom 1 and side walls 2 enclosed in a steel shell 3, and cathode current feeders 4 in the cell bottom 1, as in Figure 1. On the carbon cell bottom 1, the drained cathode cell of Figure 2 is fitted with drained cathode blocks 13 of pre-baked carbon whose entire external surfaces are coated with the aluminium-wettable coating 9. As illustrated in the left hand part of Figure 2, these blocks 13 may have internal inserts 14 of cast iron or another heavy material which acts as ballast so that the blocks 13 sink in the electrolyte 7 and in the aluminium layer 8, and rest firmly on cell bottom 1. Or, as illustrated in the right hand part of Figure 2, the blocks 13 may be secured to the cell bottom by any convenient means, such as by reaction bonding or by mechanical means.

In use, the anodes 5 or 6 are suspended with their flat lower faces facing the corresponding upper flat surfaces of the aluminium-wettable coating 9 on blocks 13, with a relatively small and constant anode-cathode gap of about 25 to 35 mm. The upper flat surface of the aluminium-wettable coating 9 acts as a drained cathode, from which a film of cathodically produced aluminium is constantly drained into the pool 8 of molten aluminium. The level of pool 8 may fluctuate from close to the cell bottom 1 up to adjacent the upper flat surfaces of the aluminium-wettable coating 9 of blocks 13, whereby the product aluminium may be tapped off periodically in the usual way.

The drained cathode blocks 13 may have any convenient height depending on the desired operating configuration, in particular so that the anodes 5 or 6 can be maintained close to the minimum height that they would have in conventional operation, i.e. before the blocks 13 were fitted. For instance, the height of the blocks 13 may be from 150 to 300 mm.

It is also possible to suspend the blocks 13 from the anodes 5 or 6 by attachments made of non-electrically conductive materials that are resistant to the electrolyte, for example aluminium nitride or nickel suboxides or alumina when the drained cell is operated at low temperature, which attachments also serve as spacers maintaining the desired small anode gap. In this way, the cathode blocks 13 can be removed from the cell with the anodes 5 or 6 for periodic servicing or replacement.

As a modification of the embodiment of Figure 2, the pool 8 of molten aluminium could contain a packed or loose bed of pieces of carbon with internal ballast whose surfaces are coated with a permanent aluminium-wettable coating 9 in accordance with the invention. Such pieces, which may be of random shapes or regular shapes such as rings, form a bed which inhibits wave motion in the molten aluminium pool 8 and thereby enables operation with a reduced anode-cathode distance, as explained in U.S. patent No. 4,552,630.

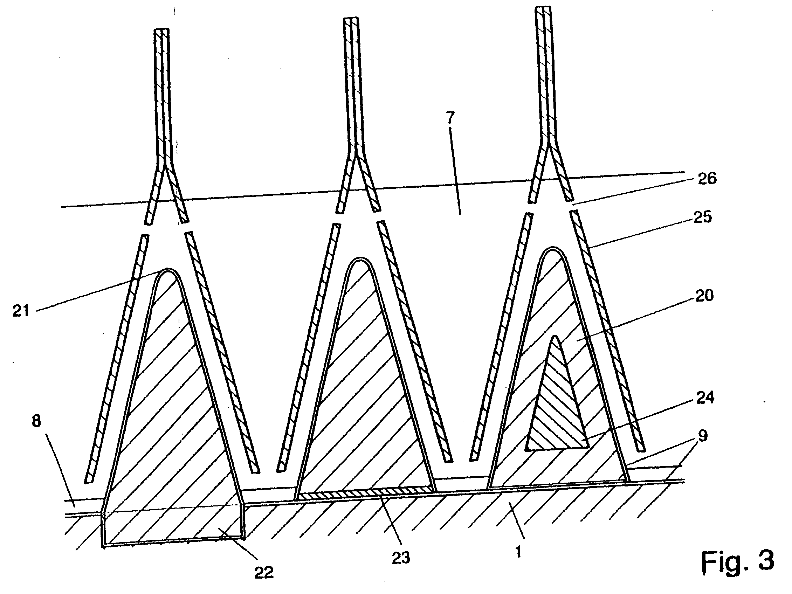

Figure 3 shows another anode-cathode configuration which can be fitted in a conventional aluminium production cell like that of Figure 1, or in a drained cell of new design.

In this design, carbon prisms or wedges 20 are fitted on a carbon cell bottom 1, for instance by having bottom parts 22 embedded in the cell bottom, by being bonded by a layer 23 to the cell bottom when the cell is being built or reconstructed, or by having internal ballast 24, for instance of cast iron, which holds them on the cell bottom.

Advantageously, the layer 23 bonding the carbon wedges 20 to the carbon cell bottom 1 may consist of several layers of the slurry according to the invention applied to each of the surfaces which are applied together while the outer layers of the applied slurry are still tacky, and then dried. The preformed $TiB_2$ or other refractory boride from the slurry provides an excellent conductive bond, the dried slurry acting as a conductive glue.

These carbon wedges 20 have inclined side faces, for instance at an angle of about 45° to 10° to the vertical, meeting along a rounded top edge 21. The wedges 20 are placed side by side, spaced apart at their bottoms to allow for a shallow layer 8 of aluminium on the cell bottom 1. The cell bottom 1 can be coated with a protective aluminium-wettable coating 9 as described above. The edges 21 are all parallel to one another across or along the cell, and the tops of the prisms remain several centimetres below the top level of the electrolyte 7.

The inclined side faces of wedges 20, and possibly also the bottom face, are coated with a permanent aluminium-wettable coating 9. These coatings 9, like that of the cell bottom 1, are applied from a slurry as before. In use, these coatings 9 on the sloping surfaces of wedges 20 form drained cathode surfaces from which cathodically produced aluminium drains permanently into the pool 8. Current is supplied to the wedges 20 via conductor bars (not shown, but like the bars 4 of Figure 1) in the cell bottom 1.

Over the cathode-forming wedges 20 are fitted anodes 25, each formed by a pair of plates which fit like a roof over the wedges 20, parallel to the inclined surfaces of wedges 20 with a small anode-cathode distance of about 15 to 20 mm. At their tops, the pairs of anode plates 25 are joined together and connected to a positive current supply. The anode plates 25 have openings 26, for example adjacent the top of their inclined faces, for the escape of anodically-generated gas, usually oxygen. The anode plates 25 are made of or coated with any suitable non-consumable or substantially non-consumable electronically-conductive material resistant to the electrolyte and to the anode product of electrolysis, which in the case of the electrolysis of alumina utilising non-carbon anodes, is oxygen. For example, the plates may have a metal, alloy or cermet substrate which is protected in use by a metal oxide layer and a ceriumoxyfluoride-based protective coating produced and/or maintained by maintaining a concentration of cerium in the electrolyte, as described in US patent No. 4,614,569.

Alternatively, it is possible to employ consumable carbon anodes with wedge-shaped bottoms which dip between the cathode wedges 20, the anodes having inclined, consumable operative surfaces facing the inclined surfaces of two adjacent cathode-forming wedges 20, which are maintained with a substantially constant anode-cathode distance by lowering the anodes at a rate to compensate for their consumption.

These designs employing wedge-shaped cathodes have several advantages. As before, the permanent aluminium-wettable refractory surfaces on the drained cathodes protect the carbon from attack and the cell can be operated with a small anode-cathode distance ensuring efficient operation. In addition, the design permits a very high productivity per unit area of the cell floor, possibly 1.5 to 2.5 times as much as in a conventional cell.

It is also possible to use pieces of carbon coated as described above with a permanent aluminium-wettable refractory surface, as other components in aluminium production cells in particular components which in use are exposed to molten aluminium, for instance weirs or baffles, side walls etc., or as components in other molten salt electrolysis cells.

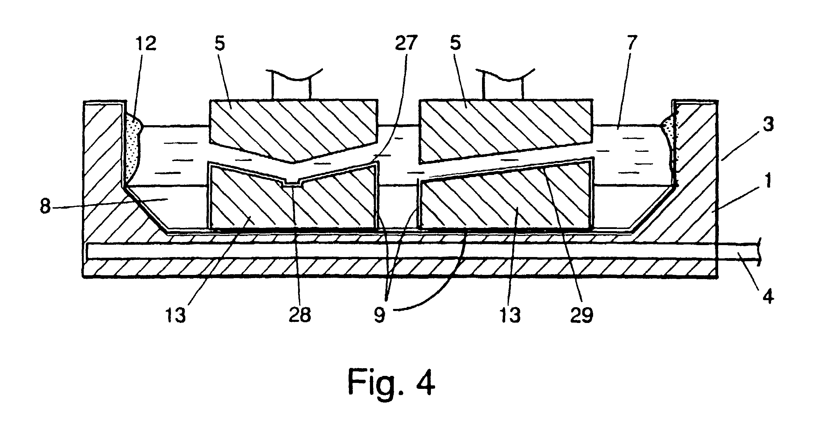

Fig. 4 shows a modification of the cell of the preceding Figures wherein cathode blocks 13 fixed on the cell bottom 1 have inclined upper faces coated with the aluminium-wettable refractory drained coating 9. The left-hand part of Fig. 4 shows blocks 13 with V-shaped faces 27 inclined down towards a central groove 28 in which the product aluminium collects. This groove 28 can be slightly inclined towards one end to facilitate the flow of molten aluminium into pool 8. Above the V-shaped surfaces 27 of blocks 13 are anodes 5 whose bottom surfaces have corresponding V-shaped surfaces, facing the surfaces 27 with a constant anode-cathode gap.

The right hand side of Fig. 4 shows cathode blocks 13 coated with the aluminium-wettable drained coating 9, these blocks having top surfaces 29 inclined to one side, and the anodes 5 have each a corresponding sloping lower face. In these embodiments, the sloping surfaces of the anodes 5 considerably improve gas release compared to conventional pre-baked anodes with a flat bottom. The improved gas release contributes to a better circulation of the electrolyte 7 and helps reduce the voltage across the cell.

The coating 9 of the aluminium-wettable refractory material can also be used in other cell designs, for example where drained cathodes have vertical surfaces or are sloping at a small angle to vertical.

The invention will be further described in the following examples:

Example I

A slurry was prepared from a dispersion of 10 g $TiB_2$, 99.5% pure, -325 mesh (<42 micrometer), in 25 ml of colloidal alumina containing about 20 weight% of solid alumina. Coatings with a thickness of 150±50 to 500±50 micrometer were applied to the faces of carbon blocks. Each layer of slurry was allowed to dry for several minutes before applying the next, followed by a final drying by baking in an oven at 100 to 150°C for 30 minutes to 1 hour.

The above procedure was repeated varying the amount of $TiB_2$ in the slurry from 5 to 15 g and varying the amount of colloidal alumina from 10 ml to 40 ml. Coatings were applied as before. Drying in air took 10 to 60 minutes depending on the dilution of the slurry and the thickness of the coatings. In all cases, an adherent layer of TiB$_2$ was obtained.

Example II

An anthracite-based cathode sample was coated with an adherent layer containing TiB$_2$ as follows.

A layer of pre-formed particulate TiB$_2$, 99.5% pure, was applied to an anthracite cathode sample in three coats using a solution of 25 g TiB$_2$ -325 mesh (<42 micrometer) in 10 ml of colloidal alumina containing about 20% of the colloid. Each coating had a thickness of 150±50 micrometer, and was dried for 10 minutes before applying the next coating. The sample was then finally dried in air at about 120°C for about 1/2 hour to 1 hour.

The resulting coated anthracite cathode sample had an adherent coating of TiB$_2$. Microscopic analysis of a cut specimen revealed a TiB$_2$ layer adhering firmly to the anthracite substrate.

When tested as cathode in a laboratory aluminium production cell, the sample showed good wettability with molten aluminium and no sign of deterioration. The aluminium was found to penetrate the coating and remain there.

**Claims**

1. A drained-cathode cell for the production of aluminium by the electrolysis of alumina dissolved in a molten electrolyte, the cell comprising at least one drained cathode and a facing anode spaced apart from the cathode in the electrolyte by an anode-cathode gap, said drained cathode having at least one drained cathode top surface on which during operation aluminium is cathodically produced and from which the produced aluminium constantly drains, the drained cathode being formed by one or more bodies coated with an adherent aluminium-wettable coating of refractory hard metal boride in a dried colloid, said coating being obtainable by non-reactive sintering or consolidation of preformed particulate refractory hard metal boride in the dried colloid, the dried colloid being selected from dried colloidal alumina, silica, yttria, ceria, thoria, zirconia, magnesia, lithia, monoaluminium phosphate and cerium acetate, and mixtures thereof.

2. The cell of claim 1, wherein the cathode bodies are made of carbon.

3. The cell of claim 1 or 2, wherein the cathode bodies form a cell bottom coated with said adherent aluminium-wettable coating of refractory material, said coating on the cell bottom forming the drained cathode surface

4. The cell of claim 1 or 2, wherein the cathode bodies are located over the bottom of the cell so that the aluminium produced on the drained cathode surface drains onto the cell bottom.

5. The cell of claim 4, wherein the cell bottom is made of carbon and is also coated with an adherent aluminium-wettable coating as defined in claim 1.

6. The cell of claim 4 or 5, wherein the cathode bodies are blocks of carbon placed on or secured to the cell bottom.

7. The cell of claim 6, wherein the cathode blocks are secured to the cell bottom by a bonding layer or by mechanical means.

8. The cell of claim 6, wherein the cathode blocks are secured to the cell bottom by having bottom parts embedded in the cell bottom.

9. The cell of claim 6, 7 or 8, wherein the cathode blocks placed on or secured to the cell bottom each have an upper surface which forms said drained surface, the produced aluminium which drains onto the cell bottom forming a pool whose level fluctuates from close to the cell bottom up to adjacent the drained cathode surface of the blocks.

10. The cell of claim of claim 6, wherein the cathode bodies are blocks of carbon with internal inserts which act as heavy ballast so the blocks rest firmly on the cell bottom.

11. The cell of claim 4, wherein the cathode bodies are suspended from the anodes over the cell bottom by attachments of electrically non-conductive material resistant to the electrolyte, said attachments serving as spacers maintaining a desired anode-cathode gap.

12. The cell of any preceding claim, comprising at least one aluminium collection groove for the collection of the cathodically produced aluminium draining from the cathode surface(s) during operation.

13. The cell of any preceding claim, wherein the cathode bodies have a horizontal drained cathode surface.

14. The cell of any one of claims 1, 2 and 4 to 12, wherein cathode bodies have an upright drained cathode surface.

**15.** The cell of any one of claims 1, 2 and 4 to 12, wherein the anodes and cathode have inclined facing surfaces.

**16.** The cell of claim 15, wherein the cathode bodies are prism or wedge-shaped bodies each having two oppositely inclined drained cathode surfaces in an inverted V configuration associated with an anode formed of a pair of plates of non-consumable or substantially non-consumable electronically conductive material resistant to the electrolyte, which anode plates fit like a roof over the wedge-shaped cathode bodies parallel to their inclined surfaces.

**17.** The cell of claim 16, wherein the anode plates have openings adjacent the top of their inclined faces for the escape of anodically-generated gas.

**18.** The cell of claim 15, wherein the cathode bodies each have two oppositely inclined drained cathode surfaces in V configuration and a central groove located at the bottom of the inclined drained surfaces for collecting during operation the product aluminium.

**19.** The cell of claim 18, wherein the collection groove is a recessed groove located along and below the bottom of the inclined drained cathode surfaces.

**20.** The cell of claim 19, wherein the recessed groove is inclined to facilitate evacuation of the collected molten aluminium.

**21.** The cell of claim 1, comprising side walls exposed to molten aluminium, the side walls being coated with an adherent coating of an aluminium-wettable refractory material extending at least to above the maximum level of aluminium.

**22.** The cell of claim 21, wherein a crust of solidified electrolyte is formed on the cell side walls, said side walls coating extending up to the crust.

**23.** The cell of claim 21, wherein the coating on the cell side walls extends all the way up the side walls.

**24.** The cell of claim 21, 22 or 23, wherein a different coating is provided on the upper part of the side walls to protect from oxidation and fluoride fumes.

**25.** The cell of any preceding claim, wherein said refractory hard metal boride is selected from borides of titanium, chromium, vanadium, zirconium, hafnium, niobium, tantalum, molybdenum and cerium, and combinations thereof.

**26.** The cell of claim 25, wherein said refractory hard metal boride is titanium diboride and said dried colloid is colloidal alumina.

**27.** The cell of any preceding claim, wherein prior to operation as a drained cathode the refractory material coating is aluminised by exposure to molten aluminium in the presence of a flux assisting penetration of aluminium into the refractory material.

**28.** The cell of any preceding claim, wherein the drained cathode during operation of the cell is exposed to contact with molten cryolite.

**29.** The cell of any preceding claim, wherein the anodes are consumable carbon anodes.

**30.** The cell of any one of claims 1 to 28, wherein the anodes are oxygen-evolving non-consumable or substantially non-consumable anodes.

**31.** The cell of claim 30, wherein the anodes comprise an electrically-conductive substrate coated with a protective surface layer based on cerium oxide-fluoride.

**32.** The cell of claim 1, which is in a bipolar configuration and comprising at least one bipolar electrode having on its cathode side said aluminium wettable drained surface.

**33.** A drained cathode body for use in a cell as claimed in claim 1, the drained cathode body having a bottom surface and at least one drained cathode top surface coated with an adherent aluminium-wettable coating of refractory hard metal boride in a dried colloid as defined in claim 1, said at least one drained cathode surface being inclined to the bottom surface.

**34.** The cathode body of claim 33, comprising a single inclined drained cathode surface.

**35.** The cathode body of claim 33, which is a prism or wedge-shaped body with two oppositely inclined drained cathode surfaces in an inverted V configuration.

**36.** The cathode body of claim 35, comprising two oppositely inclined drained cathode surfaces in V configuration, leading down into a central groove for collection of the product aluminium.

**37.** The cathode body of claim 36, wherein the collection groove is a recessed groove located along and below the bottom of the drained cathode surfaces.

**38.** The cathode body of claim 37, wherein the recessed groove is inclined to facilitate evacuation of collected molten aluminium.

**39.** A method of producing aluminium in a cell according to any one of claims 1 to 32, comprising electrolysing the dissolved alumina on said drained cathode surface to cathodically produce aluminium and continuously draining the produced aluminium from the drained cathode surface.

**Patentansprüche**

**1.** Zelle mit einer trockengelegten Kathode für die Herstellung von Aluminium durch die Elektrolyse von in einem geschmolzenen Elektrolyten gelösten Aluminiumoxid, wobei die Zelle mindestens eine trockengelegte Kathode und eine gegenüberliegende Anode umfasst, die von der Kathode in dem Elektrolyten durch einen Anoden-Kathodenspalt getrennt ist, wobei die trockengelegte Kathode mindestens eine trockengelegte obere Kathodenoberfläche aufweist, auf der während des Betriebs Aluminium kathodisch hergestellt wird und von der das hergestellte Aluminium konstant abläuft, wobei die trockengelegte Kathode durch ein oder mehrere Körper gebildet wird, die mit einer adhärenten, Aluminium-benetzbaren Beschichtung aus feuerfestem Hartmetallborid in einem trockenen Kolloiden beschichtet sind, wobei die Beschichtung erhältlich ist durch nicht-reaktives Sintern oder Konsolidieren von vorgeformten partikulären feuerfesten Hartmetallboriden in dem trockenen Kolloid, wobei das trockene Kolloid ausgewählt ist aus getrocknetem kolloidalen Aluminiumoxid, Siliciumdioxid, Yttriumoxid, Ceroxid, Thoriumdioxid, Zirkoniumdioxid, Magnesiumoxid, Lithiumoxid, Monoaluminiumphosphat und Ceracetat und Mischungen davon.

**2.** Zelle nach Anspruch 1, bei der die Kathodenkörper aus Kohlenstoff hergestellt sind.

**3.** Zelle nach den Ansprüchen 1 oder 2, bei der die Kathodenkörper einen Zellenboden bilden, der mit der adhärenten, Aluminium-benetzbaren Beschichtung aus feuerfestem Material beschichtet ist, wobei die Beschichtung auf dem Zellenboden die trockengelegte Kathodenoberfläche bildet.

**4.** Zelle nach Anspruch 1 oder 2, bei der die Kathodenkörper oberhalb des Bodens der Zelle derart lokalisiert sind, dass das auf der trockengelegten Kathode hergestellte Aluminium über den Zellenboden läuft.

**5.** Zelle nach Anspruch 4, bei der der Zellenboden aus Kohlenstoff hergestellt ist und auch mit einer adhärenten, Aluminium-benetzbaren Beschichtung wie in Anspruch 1 definiert beschichtet ist.

**6.** Zelle nach den Ansprüchen 4 oder 5, bei der die Kathodenkörper Blöcke aus Kohlenstoff sind, die auf dem Zellenboden platziert sind oder an ihm befestigt sind.

**7.** Zelle nach Anspruch 6, bei der die Kathodenblöcke an dem Zellenboden durch eine Bindungsschicht oder durch mechanische Mittel befestigt sind.

**8.** Zelle nach Anspruch 6, bei der die Kathodenblöcke an dem Zellenboden dadurch befestigt sind, dass sie Bodenteile aufweisen, die in den Zellenboden eingebettet sind.

**9.** Zelle nach den Ansprüchen 6, 7 oder 8, bei der die Kathodenblöcke, die auf dem Zellenboden platziert sind oder an ihm befestigt sind, jeweils eine obere Oberfläche aufweisen, welche die trockengelegte Oberfläche bildet, wobei das produzierte Aluminium, das auf den Zellenboden abfließt, einen Pool bildet, dessen Spiegel von nahe am Zellenboden bis nahe der trockengelegten Kathodenoberfläche der Blöcke fluktuiert.

**10.** Zelle nach Anspruch 6, bei der die Kathodenkörper Blöcke aus Kohlenstoff mit internen Einschüben sind, die als schwerer Ballast dienen, so dass die Blöcke auf dem Zellenboden fest verbleiben.

**11.** Zelle nach Anspruch 4, bei der die Kathodenkörper an den Anoden oberhalb des Zellenbodens durch Aufhänger aus elektrisch leitfähigem Material aufgehängt sind, das gegenüber dem Elektrolyten resistent ist, wobei die Aufhänger als Platzhalter dienen, die einen gewünschten Anodenkathodenspalt aufrechterhalten.

**12.** Zelle nach irgendeinem der vorhergehenden Ansprüche, mit mindestens einer Aluminiumsammelgrube für das Sammeln des kathodisch hergestellten Aluminiums, das von der Kathodenoberfläche oder den Kathodenoberflächen während des Betriebs abfließt ist.

**13.** Zelle nach irgendeinem der vorhergehenden Ansprüche, wobei die Kathodenkörper eine horizontale trockengelegte Kathodenoberfläche aufweisen.

**14.** Zelle nach irgendeinem der Ansprüche 1, 2 und 4 bis 12, wobei die Kathodenkörper eine aufrechte trockengelegte Kathodenoberfläche aufweisen.

**15.** Zelle nach irgendeinem der Ansprüche 1, 2 und 4 bis 12, wobei die Anoden und Kathoden geneigte gegenüberstehende Oberflächen aufweist.

**16.** Zelle nach Anspruch 15, wobei die Kathodenkörper Prismen oder keilförmige Körper sind, von denen jeder zwei gegenüberliegende geneigte trockengelegte Kathodenoberflächen in der Konfiguration eines inversen V aufweisen, die mit einer Anoden assoziiert sind, die aus einem Plattenpaar aus nicht verbrauchbaren oder im Wesentlichen nicht verbrauchbaren elektronisch leitfähigen Materialien gebildet ist, die gegenüber dem Elektrolyten resistent sind, wobei die Anodenplatten wie ein Dach über die keilförmigen Kathodenkörper parallel zu deren geneigten Oberflächen passen.

17. Zelle nach Anspruch 16, bei der die Anodenplatten Öffnungen aufweisen, die der Oberseite ihrer geneigten Seiten benachbart sind, für das Entweichen anodisch hergestellten Gases.

18. Zelle nach Anspruch 15, bei der die Kathodenkörper jeweils zwei gegenüberliegende geneigte trockengelegte Kathodenoberflächen in V-Konfiguration und eine zentrale Grube aufweisen, die am Boden der geneigten trockengelegten Oberflächen lokalisiert ist, zum Sammeln des Produktaluminiums während des Betriebes.

19. Zelle nach Anspruch 18, bei der die Sammelgrube eine zurückgesetzte Grube ist, die entlang und unter dem Boden der geneigten trockengelegten Kathodenoberflächen angeordnet ist.

20. Zelle nach Anspruch 19, bei der die zurückgesetzte Grube geneigt ist, um das Entfernen des gesammelten geschmolzenen Aluminiums zu erleichtern.

21. Zelle nach Anspruch 1, mit Seitenwänden, die dem geschmolzenen Aluminium exponiert sind, wobei die Seitenwände mit einer adhärenten Beschichtung aus einem Aluminium-benetzbaren feuerfesten Material beschichtet sind, das sich mindestens über den Maximalspiegel des Aluminiums erstreckt.

22. Zelle nach Anspruch 21, bei der eine Kruste aus verfestigtem Elektrolyten auf den Zellenseitenwänden gebildet wird, wobei die Beschichtung der Seitenwände über die Kruste hinausragt.

23. Zelle nach Anspruch 21, bei der die Beschichtung der Zellenseitenwände sich überall über die Seitenwände erstreckt.

24. Zelle nach den Ansprüchen 21, 22 oder 23, bei der eine unterschiedliche Beschichtung auf dem oberen Teil der Seitenwände zum Schutz vor Oxidation und Fluoriddämpfen bereitgestellt wird.

25. Zelle nach einem der vorhergehenden Ansprüche, bei der das feuerfeste Hartmetallborid ausgewählt ist aus Boriden von Titan, Chrom, Vanadium, Zirkonium, Hafnium, Niob, Tantal, Molybdän und Cer und Kombinationen davon.

26. Zelle nach Anspruch 25, bei der das feuerfeste Hartmetallborid Titandiborid und das Kolloid kolloidales Aluminiumoxid ist.

27. Zelle nach irgendeinem der vorhergehenden Ansprüche, bei der vor dem Betrieb als trockengelegte Kathode die feuerfeste Materialbeschichtung durch Exposition gegenüber geschmolzenem Aluminium in Gegenwart einer Flux-unterstützenden Penetration des Aluminiums in das feuerfeste Material aluminisiert wird.

28. Zelle nach irgendeinem der vorhergehenden Ansprüche, wobei die trockengelegte Kathode während des Betriebs der Zelle mit geschmolzenem Kryolyten bis zum Kontakt exponiert wird.

29. Zelle nach irgendeinem der vorhergehenden Ansprüche, bei der die Anoden verbrauchbare Kohlenstoffanoden sind.

30. Zelle nach irgendeinem der Ansprüche 1 bis 28, bei der die Anoden Sauerstoff-hervorbringende, nicht-verbrauchbare oder im Wesentlichen nicht-verbrauchbare Anoden sind.

31. Zelle nach Anspruch 30, bei der die Anoden ein elektrisch leitfähiges Substrat aufweisen, das mit einer Oberflächenschutzschicht beschichtet ist, die auf Ceroxidfluorid basiert.

32. Zelle nach Anspruch 1, die sich in einer bipolaren Konfiguration befindet und die mindestens eine bipolare Elektrode aufweist, die auf ihrer Kathodenseite die Aluminium-benetzbare trockengelegte Oberfläche aufweist.

33. Trockengelegter Kathodenkörper zur Verwendung in einer Zelle wie in Anspruch 1 beansprucht, wobei der trockengelegte Kathodenkörper eine Bodenoberfläche und mindestens eine trockengelegte Kathoden obere Oberfläche aufweist, die mit einer adhärenten Aluminium-benetzbaren Beschichtung aus feuerfestem Hartmetallborid in einem getrockneten Kolloiden wie in Anspruch 1 definiert beschichtet ist, wobei mindestens eine trockengelegte Kathodenoberfläche gegenüber der Bodenoberfläche geneigt ist.

34. Kathodenkörper nach Anspruch 33, mit einer einzelnen geneigten trockengelegten Kathodenoberfläche.

35. Kathodenkörper nach Anspruch 33, der ein Prisma oder ein keilförmiger Körper mit zwei gegenüberliegenden geneigten trockengelegten Kathodenoberflächen in einer inversen V-Konfiguration ist.

**36.** Kathodenkörper nach Anspruch 35, mit zwei gegenüberliegenden geneigten trockengelegten Kathodenoberflächen in V-Konfiguration, die nach unten in eine zentrale Grube zum Sammeln des Produktaluminiums führen.

**37.** Kathodenkörper nach Anspruch 36, bei dem die Sammelgrube eine zurückgesetzte Grube ist, die entlang und unter dem Boden der trockengelegten Kathodenoberflächen angeordnet ist.

**38.** Kathodenkörper nach Anspruch 37, bei dem die zurückgesetzte Grube geneigt ist, um das Entfernen des gesammelten geschmolzenen Aluminiums zu erleichtern.

**39.** Verfahren zur Herstellung von Aluminium in einer Zelle nach irgendeinem der Ansprüche 1 bis 32, mit Elektrolysieren des geschmolzenen Aluminiumoxids auf der trockengelegten Kathodenoberfläche um Aluminium kathodisch herzustellen und um das hergestellte Aluminium von der trockengelegten Kathodenoberfläche kontinuierlich ablaufen zu lassen.

**Revendications**

**1.** Cellule à cathode drainée, pour la production d'aluminium par l'électrolyse d'alumine dissoute dans un électrolyte fondu, la cellule comprenant au moins une cathode drainée et une anode faisant face et espacée de la cathode dans l'électrolyte par un intervalle anode-cathode, ladite cathode drainée ayant au moins une surface supérieure de cathode drainée sur laquelle l'aluminium est produit cathodiquement pendant le fonctionnement et duquel l'aluminium produit draine constamment, la cathode drainée étant formée par un ou plusieurs corps revêtus d'un revêtement adhérant mouillable par l'aluminium en borure de métal réfractaire dur dans un colloïde séché, ledit revêtement étant susceptible d'être obtenu par frittage non-réactif ou par consolidation de borure de métal réfractaire dur particulaire préformé dans le colloïde séché, le colloïde séché étant sélectionné parmi les colloïdes séchés d'alumine, de silice, d'oxyde d'yttrium, d'oxyde de cérium, d'oxyde de thorium, d'oxyde de zirconium, d'oxyde de magnésium, d'oxyde de lithium, de monoaluminium phosphate et d'acétate de cérium, et leurs mélanges.

**2.** La cellule de la revendication 1, dans laquelle les corps de la cathode sont réalisés en carbone.

**3.** La cellule de la revendication 1 ou 2, dans laquelle les corps de la cathode forment un fond de cellule revêtu avec ledit revêtement adhérant mouillable par l'aluminium en matériau réfractaire, ledit revêtement sur le fond de cellule formant la surface drainée de la cathode.

**4.** La cellule de la revendication 1 ou 2, dans laquelle les corps de la cathode sont situés au-dessus du fond de la cellule de sorte que l'aluminium produit à la surface drainée de la cathode draine sur le fond de cellule.

**5.** La cellule de la revendication 4, dans laquelle le fond de cellule est réalisé en carbone et est aussi revêtu avec un revêtement adhérant mouillable par l'aluminium comme défini dans la revendication 1.

**6.** La cellule de la revendication 4 ou 5, dans laquelle les corps de cathode sont des blocs en carbone placés sur ou assurés au fond de cellule.

**7.** La cellule de la revendication 6, dans laquelle les corps de cathode sont assurés au fond de cellule par une couche de liaison ou par des moyens mécaniques.

**8.** La cellule de la revendication 6, dans laquelle les corps de cathode sont assurés au fond de cellule en ayant des parties inférieures encastrées dans le fond de cellule.

**9.** La cellule de la revendication 6, 7 ou 8, dans laquelle les blocs de cathode placés sur ou assuré au fond de cellule ont chacun une surface supérieure qui forme ladite surface drainée, l'aluminium produit lequel draine sur le fond de cellule formant un bassin dont le niveau fluctue depuis près du fond de cellule et jusqu'à adjacent à la surface drainée de la cathode des blocs.

**10.** La cellule de la revendication 6, dans laquelle les corps de cathode sont des blocs de carbone avec des inserts internes qui agissent comme des ballasts lourds de sorte que les blocs restent fermement sur le fond de cellule.

**11.** La cellule de la revendication 4, dans laquelle les corps de cathode sont suspendus aux anodes au-dessus du fond de cellule par des attaches en matériau électriquement non-conducteur résistant à l'électrolyte, lesdites attaches servant d'espaceurs maintenant un intervalle anode-cathode souhaité.

**12.** La cellule de n'importe quelle revendication précédente, comprenant au moins un sillon de collecte d'aluminium pour la collecte de l'aluminium produit cathodiquement drainant de la/(des) surface(s) de cathode pendant le fonctionnement.

**13.** La cellule de n'importe quelle revendication précédente, dans laquelle les corps de cathode ont une surface de cathode drainée horizontale.

14. La cellule de n'importe laquelle des revendications 1, 2 et 4 à 12, dans laquelle les corps de cathode ont une surface de cathode drainée debout.

15. La cellule de n'importe laquelle des revendications 1, 2 et 4 à 12, dans laquelle les corps de cathode ont une surface de cathode drainée inclinée.

16. La cellule de la revendication 15, dans laquelle les corps de cathodes ont des corps en prisme ou en forme de coin ayant chacun deux surfaces de cathode drainées inclinées à l'opposé dans une configuration de V inversé associés avec une anode formée d'une paire de plaques en matériau électriquement conducteur non-consumable ou substantiellement non-consumable résistant à l'électrolyte, lesquelles plaques d'anode sont placées comme un toit au-dessus des corps de cathode en forme de coin parallèlement à leurs surfaces inclinées.

17. La cellule de la revendication 16, dans laquelle les plaques d'anode sont dotées d'ouvertures adjacentes au sommet de leurs faces inclinées pour le dégagement des gaz générés anodiquement.

18. La cellule de la revendication 15, dans laquelle les corps de cathode ont chacun deux surfaces de cathode drainée inclinée à l'opposé dans une configuration de V inversé et un sillon central situé au fond des surfaces drainées inclinées pour la collecte pendant le fonctionnement de l'aluminium produit.

19. La cellule de la revendication 18, dans laquelle le sillon de collecte est un sillon en retrait situé le long et en dessous du fond des surfaces de cathode drainées inclinées.

20. La cellule de la revendication 19, dans laquelle le sillon en retrait est incliné pour faciliter l'évacuation de l'aluminium fondu collecté.

21. La cellule de la revendication 1, comprenant des parois latérales exposées à l'aluminium fondu, les parois latérales étant revêtues d'un revêtement adhérant en matériau réfractaire mouillable par l'aluminium s'étendant au moins jusqu'à au-dessus du niveau maximal de l'aluminium.

22. La cellule de la revendication 21, dans laquelle une croûte d'électrolyte solidifié est formée sur les parois latérales de la cellule, ledit revêtement des parois latérales s'étendant jusqu'à la croûte.

23. La cellule de la revendication 21, dans laquelle le revêtement sur les parois latérales de la cellule s'étend sur toute la hauteur des parois latérales.

24. La cellule de la revendication 21, 22 ou 23, dans laquelle un revêtement différent est fourni sur la partie supérieure des parois latérales pour les protéger de l'oxydation et des fumées de fluorure.

25. La cellule de n'importe quelle revendication précédente, dans laquelle le borure de métal réfractaire dur est sélectionné parmi les borures de titane, de chrome, de vanadium, de zirconium, de hafnium, de niobium, de tantale, de molybdène et de cérium, et leurs combinaisons.

26. La cellule de la revendication 25, dans laquelle le borure de métal réfractaire dur est le diborure de titane et ledit colloïde séché est l'alumine colloïdale.

27. La cellule de n'importe quelle revendication précédente, dans laquelle avant le fonctionnement comme cathode drainée le revêtement de matériau réfractaire est aluminisé par l'exposition à l'aluminium fondu en présence d'un mordant assistant à la pénétration de l'aluminium dans le matériau réfractaire.

28. La cellule de n'importe quelle revendication précédente, dans laquelle la cathode drainée pendant le fonctionnement de la cellule est exposée au contact avec la cryolite fondue.

29. La cellule de n'importe quelle revendication précédente, dans laquelle les anodes sont des anodes consumables en carbone.

30. La cellule de n'importe laquelle des revendications 1 à 28, dans laquelle les anodes sont des anodes non-consumables ou substantiellement non-consumables dégageant de l'oxygène.

31. La cellule de la revendication 30, dans laquelle les anodes comprennent un substrat électriquement conducteur revêtu d'une couche de surface protectrice à base d'oxyde-fluorure de cérium.

32. La cellule de la revendication 1, laquelle est en configuration bipolaire et comprend au moins une électrode bipolaire ayant sur son côté cathode ladite surface drainée mouillable par l'aluminium.

33. Un corps de cathode drainée pour une utilisation dans une cellule comme revendiquée dans la revendication 1, le corps de cathode drainée ayant une surface inférieure et au moins une surface supérieure de cathode drainée revêtue d'un revêtement adhérant mouillable par l'aluminium en borure de métal réfractaire dur dans un colloïde séché comme défini dans la revendication 1, ladite au moins une surface de cathode drainée étant inclinée par rapport à la surface inférieure.

34. Le corps de cathode de la revendication 33, comprenant une unique surface de cathode drainée inclinée.

35. Le corps de cathode de la revendication 33, lequel est un corps en forme de prisme ou en forme de coin avec deux surfaces de cathode drainées inclinées à l'opposé dans une configuration de V inversé.

36. Le corps de cathode de la revendication 35, comprenant deux surfaces de cathode drainée inclinées à l'opposé, menant à un sillon central pour la collecte de l'aluminium produit.

37. Le corps de cathode de la revendication 36, dans laquelle le sillon de collecte est un sillon en retrait situé le long et en dessous du fond des surfaces de cathode drainée.

38. Le corps de cathode de la revendication 37, dans laquelle le sillon en retrait est incliné pour faciliter l'évacuation de l'aluminium fondu collecté.

39. Méthode de production d'aluminium dans une cellule selon n'importe laquelle des revendications 1 à 32, laquelle méthode comprend l'électrolyse d'alumine dissoute sur ladite surface de cathode drainée pour produire cathodiquement de l'aluminium et le drainage continuel de l'aluminium produit de la surface de cathode drainée.

Fig. 1

Fig. 2

Fig. 3

Fig. 4